# EUROPÄISCHE PATENTSCHRIFT

(11) **EP 3 318 846 B1**
(45) Veröffentlichungstag und Bekanntmachung des Hinweises auf die Patenterteilung: **19.06.2019**
(21) Anmeldenummer: 17020516.5
(22) Anmeldetag: 03.11.2017
(51) Int. Cl.: G01C 21/36

(54) **VERFAHREN ZUM ANZEIGEN EINER NAVIGATIONSANZEIGE, NAVIGATIONSSYSTEM UND KRAFTFAHRZEUG**
METHOD FOR DISPLAYING A NAVIGATION DISPLAY, NAVIGATION SYSTEM AND MOTOR VEHICLE
PROCÉDÉ D'AFFICHAGE D'UN AFFICHAGE DE NAVIGATION, SYSTÈME DE NAVIGATION ET VÉHICULE AUTOMOBILE

(30) Priorität: 04.11.2016 CZ 20160690
(43) Veröffentlichungstag der Anmeldung: 09.05.2018
(73) Patentinhaber: Skoda Auto a.s., 29301 Mladá Boleslav (CZ)
(72) Erfinder: WEBER, Norbert, 12000 Praha (CZ)

(56) Entgegenhaltungen:
- WO-A1-2016/034736
- DE-A1-102007 037 993
- DE-A1-102012 020 568
- DE-A1-102013 205 148

## Beschreibung

Verfahren zum Anzeigen einer Navigationsanzeige, Navigationssystem und Kraftfahrzeug Die Erfindung betrifft ein Verfahren zum Anzeigen einer Navigationsanzeige auf einer Anzeigeeinrichtung für ein Kraftfahrzeug, wobei eine aktuelle geographische Position bestimmt wird und eine Darstellung einer Karte auf der Anzeigeeinrichtung angezeigt wird, wobei die Darstellung der Karte zumindest einen Teil eines vorbestimmten geographischen Bereichs um die aktuelle geographische Position umfasst. Des Weiteren betrifft die Erfindung auch ein Navigationssystem, sowie ein Kraftfahrzeug.

Es ist bekannt, dass Navigationssysteme auf eine Anzeigeeinrichtung Darstellungen einer Karte, wie beispielsweise einer Straßenkarte, anzeigen können, in welcher beispielsweise die aktuelle Position und gegebenenfalls eine berechnete Navigationsroute oder zumindest ein Teil davon dargestellt sind. Zudem ist es auch bekannt, dass vielzählige weitere Informationen in einem Kraftfahrzeug dargestellt werden können, insbesondere auch Informationen, die über das Internet von externen Content Providern abgerufen werden können. Beispielsweise ist es möglich, über das Infotainmemt-System Wetterinformationen abzurufen.

Die US 2004/0059501 A1 offenbart ein Verfahren, gemäß welchem von einem Kraftfahrzeug Informationen von einem Straßeninfrastruktursystem abgerufen werden können. Diese Informationen betreffen insbesondere Ereignisse wie Linkskurven, Rechtskurven, Stau, Schneefall, nasse Fahrbahn, oder Ähnliches. Weiterhin kann eine Anzeige im Kraftfahrzeug bereitgestellt werden, welches die entsprechenden Ereignisse in Form von Symbolen entlang einer Linie oder eines linearen Verlaufs ausgehend von der aktuellen Position darstellt.

In ähnlicher Weise beschreibt die DE 10 2007 0 29 651 A1 ein Navigationssystem, welches die Route in Form eines Balkens darstellt, und auf welcher verschiedene Wegpunkte, die beispielsweise Rastplätze, Tankstellen, Ortschaften, usw., bezeichnen, dargestellt sind sowie auch eine Angabe über eine prognostizierte zeitliche und eine prognostizierte örtliche Position.

Es sind damit vielzählige Möglichkeiten bereitgestellt, einen Fahrer eines Kraftfahrzeugs mit nützlichen Informationen zu versorgen. Aufgrund dieser hohen Informationsfülle jedoch gestalten sich Anzeigen in einem Kraftfahrzeug jedoch sehr unübersichtlich.

Die DE 10 2012 020 568 A1 beschreibt ein Verfahren zum Betreiben einer Navigationseinrichtung eines Kraftwagens, wobei eine Anpassungseinrichtung ein jeweiliges Signal betreffend eine Umgebung des Kraftwagens von mindestens einem Messgrößenaufnehmer, zum Beispiel einen Kraftwagensensor, empfängt. In Abhängigkeit des zumindest einen Signals wird ein naturgetreues Bild der Umgebung erzeugt, wobei in dem naturgetreuen Bild zumindest eine anhand des Signals erkannte Eigenschaft oder Beschaffenheit der Umgebung wiedergegeben ist, die auch von dem Fahrer optisch wahrnehmbar ist, und das erzeugte naturgetreue Bild der Umgebung wird mit einer Karte der Umgebung kombiniert und eine dadurch erzeugte kombinierte Grafik an eine Anzeigeeinrichtung übermittelt.

Die WO 2016/034736 A1 beschreibt ein Verfahren, gemäß welchem Live-Fahrzeugsondendaten bezogen auf die Bewegung von Fahrzeugen in Bezug auf die Zeit entlang eines navigierbaren Elements, insbesondere einer Straße oder Route, erhalten werden. Die Sondendaten werden verwendet, um eine aktuelle Geschwindigkeit der Fahrt entlang des navigierbaren Elements zu bestimmen, die mit der freien Flussgeschwindigkeit der Fahrt für das navigierbare Element verglichen wird. Wenn die momentane Fahrtgeschwindigkeit entlang des Elements relativ zu der freien Flussgeschwindigkeit um weniger als eine Schwelle verringert ist, die mit dem identifizieren eines Stauereignisses verbunden ist, und erhaltene Wetterdaten anzeigen, dass das navigierbare Element durch eine oder mehrere ungünstige Wetterbedingungen beeinflusst wird, dann wird ein Wetterereignis generiert.

Die DE 10 2013 205 148 A1 beschreibt eine Navigationseinrichtung für ein Zweirad-Motorfahrzeug mit einem Fahrerstrecke-Einstellmittel, welches eine Fahrstrecke, auf welcher ein Benutzer mit dem Zweirad-Motorfahrzeug fährt, einstellt, mit einem Wetterinformation-Anzeigemittel, welches auf einem Navigationsbildschirm Wetterinformationen auf der eingestellten Fahrstrecke zu einer vorbestimmten Zeit anzeigt, und mit einem Fahrt-Zeitplan-Zeit-Einstellmittel, welches eine Fahrt-Zeitplan-Zeit von einem eigenen Fahrzeug verändert, und das dazu ausgelegt ist, die Fahrt-Zeitplan-Zeit von dem eigenen Fahrzeug auf der Fahrstrecke einzustellen, welche durch das Fahrstrecke-Einstellmittel eingestellt ist. Das Wetterinformation-Anzeigemittel zeigt gleichzeitig auf dem Navigationsbildschirm Positionsinformationen von dem Fahrzeug auf der Fahrstrecke und die Wetterinformationen auf der Fahrstrecke basierend auf der Fahrt-Zeitplan-Zeit an, welche durch das Fahrt-Zeitplan-Zeit-Einstellmittel spezifiziert ist.

Die DE 10 2007 037 993 A1 beschreibt ein Verfahren zum Betrieb eines Navigationssystems in einem Fahrzeug mit einer Wegenetzdatenbank, einer Routenberechnungseinheit zur Berechnung einer geplanten Route von einem Startpunkt zu einem Zielpunkt, eine Signalempfangseinheit zum Empfangen von Positionssignalen, insbesondere GPS-Signalen, zumindest einen Witterungssensor oder eine Witterungssensorschnittstelle, über die Daten zumindest eines Witterungssensors empfangen werden können, wobei aktuelle Witterungsverhältnisse durch Auswertung der Messdaten des Witterungssensors bestimmt werden und ein Witterungswarnhinweis unter Berücksichtigung der aktuellen Witterungsverhältnisse ausgegeben wird und/oder eine geplante Route unter Berücksichtigung der aktuellen Witterungsverhältnisse berechnet wird.

Daher ist es Aufgabe der vorliegenden Erfindung, ein Verfahren zum Anzeigen einer Navigationsanzeige, ein Navigationssystem und ein Kraftfahrzeug bereitzustellen, welche eine möglichst übersichtliche und zugleich informative Anzeige von Navigationsinformationen ermöglichen.

Diese Aufgabe wird gelöst durch ein Verfahren, ein Navigationssystem und ein Kraftfahrzeug mit den Merkmalen gemäß den jeweiligen unabhängigen Ansprüchen. Vorteilhafte Ausgestaltungen der Erfindung sind in den abhängigen Ansprüchen angegeben.

Beim erfindungsgemäßen Verfahren zum Anzeigen einer Navigationsanzeige auf einer Anzeigeeinrichtung für ein Kraftfahrzeug wird eine aktuelle geographische Position, insbesondere der Anzeigeeinrichtung bzw. des die Anzeigeeinrichtung umfassenden Navigationssystems oder eines das Navigationssystem umfassenden Kraftfahrzeugs, bestimmt und eine Darstellung einer Karte auf der Anzeigeeinrichtung angezeigt, die zumindest einen Teil eines vorbestimmten geographischen Bereichs um die aktuelle geographische Position umfasst. Darüber hinaus werden Wetterdaten betreffend zumindest den vorbestimmten geographischen Bereich um die aktuelle Position bereitgestellt und in Abhängigkeit von den Wetterdaten ermittelt, ob in dem vorbestimmten Bereich ein geographisches Gebiet mit vorbestimmten Wetterverhältnissen vorliegt. Falls dabei das Ermitteln ergibt, dass in dem vorbestimmten Bereich ein Gebiet mit den vorbestimmten Wetterverhältnissen vorliegt, wird das geographische Gebiet mit den vorbestimmten Wetterverhältnissen in der Darstellung der Karte optisch kenntlich gemacht. Zusätzlich zum optischen Kenntlichmachen des geographischen Gebiets mit den vorbestimmten Wetterverhältnissen wird eine Geschwindigkeitsempfehlung als Zahlenwert angezeigt, wobei die Geschwindigkeitsempfehlung in Abhängigkeit von einer mittleren Niederschlagsmenge in Bezug auf zumindest einen Teilbereich des geographischen Gebiets mit den vorbestimmten Wetterverhältnissen ermittelt wird.

Hierdurch lassen sich vorteilhafterweise Wetterinformationen direkt in die Navigationsanzeige integrieren und müssen somit nicht durch eine separate Anzeige in unübersichtlicher Weise angezeigt werden. Insbesondere ist es vorteilhafterweise möglich, dass der Fahrer beispielsweise diese Wetterinformationen auch in einem direkten Bezug zu seiner aktuellen Position sowie optional zu seiner geplanten Route sehen kann. Gerade vorbestimmte Wetterverhältnisse wie beispielsweise Regen können die Fahrsicherheit stark beeinträchtigen, insbesondere durch Aquaplaning oder Rutschgefahr, sodass eine Anzeige solcher Wetterverhältnisse direkt in der dargestellten Karte eine frühzeitige Erkennung für den Fahrer ermöglicht. Zudem kann der Fahrer vorteilhafterweise auch seine Route entsprechend den ermittelten Gebieten mit den vorbestimmten Wetterverhältnissen planen. Hierdurch lassen sich Gefahrensituationen sogar vermeiden.

Die optische Kenntlichmachung des geographischen Gebiets mit den vorbestimmten Wetterverhältnissen in der Darstellung der Karte kann auf jede beliebige Art und Weise erfolgen, wie beispielsweise eine farbige Umrandung des Gebiets mit den vorbestimmten Wetterverhältnissen, eine farbliche und flächige Hervorhebung, oder Schraffuren des geographischen Gebiets mit den vorbestimmten Wetterverhältnissen, oder Ähnliches.

Bei einer vorteilhaften Ausgestaltung der Erfindung stellt das Gebiet mit den vorbestimmten Wetterverhältnissen ein Niederschlagsgebiet dar. Wie beschrieben, sind Kenntnisse über Niederschläge während der Fahrt besonders sicherheitsrelevant. Durch diese vorteilhafte Ausgestaltung lassen sich Niederschlagsgebiete, d.h. Gebiete, in welchen es aktuell regnet, schneit, hagelt, oder Ähnliches, geographisch korrekt in der dargestellten Karte abbilden. Solche Niederschlagsgebiete können ähnlich wie ein Regenradarbild der dargestellten Straßenkarte, insbesondere zumindest zum Teil transparent, überlagert sein, und ebenfalls andersfarbig dargestellt sein, mit einer markierten Umrandung, oder Ähnliches. Vorteilhaft ist dabei vor allem eine farbliche Darstellung des Gebiets mit den vorbestimmten Wetterverhältnissen, die dennoch transparent ist, um die in der Darstellung dargestellten Straßen der Karte noch gut erkennen zu können.

Die aktuellen Wetterdaten können dabei insbesondere von einer externen Einrichtung, beispielsweise von einem Content Provider über das Internet bezogen werden. Insbesondere kann die Anzeigeeinrichtung oder das die Anzeigeeinrichtung umfassende Navigationssystem dazu ausgelegt sein, aktuelle Wetterdaten für den vorbestimmten geographischen Bereich um die aktuelle geographische Position regelmäßig während der Fahrt abzurufen, und darauf basierend die Darstellung zur aktualisieren.

Gemäß einer weiteren vorteilhaften Ausgestaltung der Erfindung wird zusätzlich zum optischen Kenntlichmachen des geographischen Gebiets mit den vorbestimmten Wetterverhältnissen ein Symbol, insbesondere ein Niederschlagssymbol, angezeigt. Durch ein derartiges Symbol kann ein Fahrer deutlich stärker auf die Gefahrensituation aufmerksam gemacht werden. Befindet sich die aktuelle Position dabei beispielsweise innerhalb des geographischen Gebiets mit den vorbestimmten Wetterverhältnissen, wie beispielsweise innerhalb des Niederschlagsgebiet, kann dieses Symbol optional auch korrespondierend zu dem Symbol, welches die aktuelle Position in der Kartendarstellung repräsentiert, mitbewegt werden. Zudem können über dieses Symbol oder auch weitere Symbole dem Fahrer zusätzliche weitere wesentliche Informationen über diese Niederschlagsgebiet ausgegeben werden, wie im Folgenden näher beschrieben ist. Erfindungsgemäß wird zusätzlich zum optischen Kenntlichmachen des geographischen Gebiets mit den vorbestimmten Wetterverhältnissen eine Geschwindigkeitsempfehlung als Zahlenwert angezeigt. Hierdurch lässt sich die Fahrsicherheit vorteilhafterweise zusätzlich noch erhöhen. Der Fahrer wird also nicht nur auf das Vorhandensein des Niederschlagsgebiet sowie dessen Position aufmerksam gemacht, sondern erhält auch noch hilfreiche Informationen darüber, wie, d.h. mit welcher Geschwindigkeit, ein Durchfahren dieses Gebiets mit den vorbestimmten Wetterverhältnissen auf sichere Weise möglich ist.

Besonders vorteilhaft ist es, wenn dieser Geschwindigkeitswert für die Geschwindigkeitsempfehlung flexibel anpassbar ist. Daher ist es erfindungsgemäß vorgesehen, dass die Geschwindigkeitsempfehlung in Abhängigkeit von einer mittleren Niederschlagsmenge in Bezug auf zumindest einen Teilbereich des geographischen Gebiets mit den vorbestimmten Wetterverhältnissen ermittelt wird. Hierbei kann beispielsweise die Niederschlagsmenge über das gesamte Niederschlagsgebiet gemittelt werden und in Abhängigkeit davon die Geschwindigkeitsempfehlung berechnet werden, oder es können vorteilhafterweise auch lokale Niederschlagsunterschiede innerhalb des zusammenhängenden Niederschlagsgebiets berücksichtigt werden und so für jeweilige Teilbereiche des Niederschlagsgebiets mittlere Niederschlagsmengen berechnet und in Abhängigkeit davon jeweilige Geschwindigkeitsempfehlungen berechnet werden. Die für die jeweiligen Teilbereiche bestimmten Geschwindigkeitsempfehlungen müssen dabei nicht alle gleichzeitig angezeigt werden. Vorteilhaft ist es, wenn die Anzeige der Geschwindigkeitsempfehlung in Abhängigkeit der aktuellen Position erfolgt. Im Fall, dass sich die aktuelle Position im Niederschlagsgebiet befindet, kann für den zur aktuellen Position korrespondierenden Teilbereich des Niederschlagsgebiets die entsprechende Geschwindigkeitsempfehlung berechnet und angezeigt werden.

Auch die berechnete Geschwindigkeitsempfehlung kann dabei fortwährend aktualisiert werden, wie beispielsweise immer dann, wenn sich die Niederschlagsmengen für den zumindest einen Teilbereich des geographischen Gebiets mit den vorbestimmten Wetterverhältnissen ändern. Die Geschwindigkeitsempfehlung kann analog zum angezeigten Symbol, insbesondere auch innerhalb des angezeigten Symbols als Zahlenwert dargestellt werden. Befindet sich die aktuelle Position des Kraftfahrzeugs bzw. des Navigationssystems bereits innerhalb des Niederschlagsgebiet, so kann auch die aktuelle Geschwindigkeitsempfehlung betreffen den Teilbereich des geographischen Gebiets mit den vorbestimmten Wetterverhältnissen, in welchem sich die aktuelle Position befindet, korrespondierend zum Symbol, welches in der Kartendarstellung die aktuelle Position repräsentiert, mitbewegt werden.

Durch diese vorteilhafte Ausgestaltung der Erfindung lässt sich eine optimale Anpassung der Geschwindigkeitsempfehlung an die Kritikalität der durch das Niederschlagsgebiet gegebenen Situation ermöglichen. Bei sehr starken Niederschlägen, d.h. bei sehr hohen Niederschlagsmengen, kann die Geschwindigkeitsempfehlung entsprechend niedriger ausfallen, als bei geringen Niederschlagsmengen.

So ist in Anpassung an vielzählige unterschiedliche Situationen das Bereitstellen einer Geschwindigkeitsempfehlung besonders flexibel möglich, die ein sicheres Durchfahren eines Niederschlagsgebiets ermöglicht und dadurch die Verkehrssicherheit enorm erhöht.

Zur Berechnung der Geschwindigkeitsempfehlung können aber auch weitere Parameter als nur die Niederschlagsmenge berücksichtigt werden, insbesondere auch kraftfahrzeugspezifische Parameter, wie Art der Reifen, Reifenprofil, Reibwerte, oder Ähnliches, um noch bessere Anpassungsmöglichkeiten der empfohlenen Geschwindigkeit insbesondere Maximalgeschwindigkeit, zu ermöglichen.

Gemäß einer weiteren Ausführungsform der Erfindung kann die Niederschlagsmenge auf Basis der Wetterdaten bestimmt werden. Insbesondere kann die Niederschlagsmenge als Teil der bereitgestellten Wetterdaten ebenfalls bereitgestellt sein. Dies hat den großen Vorteil, dass sich Niederschlagsmengen in vorausschauender Weise ermitteln lassen und beispielsweise schon Geschwindigkeitsempfehlungen für Niederschlagsgebiete bereitstellen lassen, wenngleich auch die aktuelle Position das Niederschlagsgebiet noch nicht erreicht hat. Der Fahrer kann dann bereits vorab anhand der Geschwindigkeitsempfehlung für das vorausliegende Niederschlagsgebiet die Kritikalität der Situation erkennen und besser einschätzen.

Bei einer weiteren vorteilhaften Ausgestaltung der Erfindung wird die Niederschlagsmenge mittels eines Sensors, insbesondere Regensensors, bestimmt, wenn die aktuelle Position im geographischen Gebiet mit den vorbestimmten Wetterverhältnissen liegt. Hierdurch lassen sich vorteilhafterweise Kraftfahrzeugsensoren, wie beispielsweise üblicherweise sowieso vorhandene Regensensoren, verwenden, um eine besonders präzise und aktuelle Ermittlung der Niederschlagsmenge zu ermöglichen. Niederschlagsmengen können auch über eine Intervallschaltung von den Scheibenwischern abgerufen werden. Auch kann eine der Niederschlagsmenge entsprechend neue Geschwindigkeitsempfehlung, insbesondere mit einer zu ermittelnden Zeitverzögerung, angezeigt werden.

Diese beiden Varianten der Bestimmung der Niederschlagsmenge kann in vorteilhafterweise auch kombiniert werden. Beispielsweise kann, solange das Kraftfahrzeug bzw. die aktuelle Position noch nicht im Niederschlagsgebiet liegt, die Niederschlagsmenge vorausschauend auf Basis der Wetterdaten bestimmt werden, wären dann, wenn die aktuelle Position in das Niederschlagsgebiet eintritt oder sich in diesem befindet, die Niederschlagsmenge alternativ oder zusätzlich mittels Kraftfahrzeugsensoren, wie den Regensensor, bestimmt werden, was eine besonders genaue Ermittlung der aktuellen Niederschlagsmenge ermöglicht. Die Geschwindigkeitsempfehlung kann damit noch mit deutlich höherer Genauigkeit auf die aktuelle Situation angepasst werden.

Gemäß einer weiteren vorteilhaften Ausgestaltung der Erfindung wird eine Navigationsroute von einer Startposition zu einer Zielposition ermittelt, wobei eine Länge des Gebiets mit den vorbestimmten Wetterverhältnissen entlang der Navigationsroute ermittelt und als Zahlenwert in der Darstellung, beispielsweise ebenfalls in dem Symbol oder in einem separaten Symbol, angezeigt wird. Hierdurch lässt sich vorteilhafterweise auch noch die Information über die Länge bzw. Ausdehnung des Niederschlagsgebiets anzeigen, sodass der Fahrer diese Situation noch besser einschätzen kann.

Bei einer weiteren Vorteil haften Ausgestaltung der Erfindung wird eine Navigationsroute von einer Startposition zu einer Zielposition ermittelt, wobei für den Fall, dass sich die aktuelle Position im Gebiet mit den vorbestimmten Wetterverhältnissen befindet, eine Restlänge des Gebiets mit den vorbestimmten Wetterverhältnissen von der aktuellen Position bis zu einem Ende des Gebiets mit den vorbestimmten Wetterverhältnissen entlang der Navigationsroute ermittelt und als Zahlenwert in der Darstellung, beispielsweise wiederum in dem beschriebenen Symbol, angezeigt wird. Wenn der Fahrer also beispielsweise das Niederschlagsgebiet durchfährt, wird ihm in aktualisierter Weise die Restlänge bis zum Verlassen des Niederschlagsgebiets angezeigt. Die Restlänge wird dabei in Abhängigkeit von der aktuellen Position, die fortwährend aktualisiert wird, sowie auch in Abhängigkeit von den fortwährend aktuell erfassten Wetterdaten aktualisiert. Damit ist der Fahrer vorteilhafterweise jederzeit umfassend informiert, insbesondere über die Kritikalität der Niederschlagssituation, sowie über deren Ausdehnung und deren Andauern.

Des Weiteren betrifft die Erfindung ein Navigationssystem mit einer Anzeigeeinrichtung für ein Kraftfahrzeug, wobei das Navigationssystem dazu ausgelegt ist, eine aktuelle geographische Position zu bestimmen, und eine Darstellung einer Karte auf der Anzeigeeinrichtung anzuzeigen, welche zumindest einen Teil eines vorbestimmten geographischen Bereichs um die aktuelle geographische Position umfasst. Dabei ist das Navigationssystem weiterhin dazu ausgelegt, in Abhängigkeit von bereitgestellten Wetterdaten betreffend zumindest den vorbestimmten geographischen Bereich um die aktuelle Position, zu ermitteln, ob in dem vorbestimmten Bereich ein geographisches Gebiet mit vorbestimmten Wetterverhältnissen vorliegt, und falls das Ermitteln ergibt, dass in dem vorbestimmten Bereich ein Gebiet mit den vorbestimmten Wetterverhältnissen vorliegt, das geographische Gebiet mit den vorbestimmten Wetterverhältnissen in der Darstellung der Karte optisch kenntlich zu machen. Das Navigationssystem ist dazu ausgelegt, zusätzlich zum optischen Kenntlichmachen des geographischen Gebiets mit den vorbestimmten Wetterverhältnissen eine Geschwindigkeitsempfehlung als Zahlenwert anzuzeigen und die Geschwindigkeitsempfehlung in Abhängigkeit von einer mittleren Niederschlagsmenge in Bezug auf zumindest einen Teilbereich des geographischen Gebiets mit den vorbestimmten Wetterverhältnissen zu ermitteln.

Die für das erfindungsgemäße Verfahren und seine Ausgestaltungen beschriebenen Vorteile gelten in gleicher Weise für das erfindungsgemäße Navigationssystem.

Bevorzugt ist das Navigationssystem auch dazu ausgelegt, von einer kraftfahrzeugexternen Einrichtung, beispielsweise einem Internet-Server, wie einen Content Provider, die Wetterdaten abzurufen, insbesondere fortwährend während der Fahrt, periodisch, oder Ähnliches.

Darüber hinaus ermöglichen die im Zusammenhang mit dem erfindungsgemäßen Verfahren und seine Ausgestaltungen genannten Verfahrensschritte die Weiterbildung des erfindungsgemäßen Navigationssystems durch weitere gegenständliche Merkmale. Darüber hinaus betrifft die Erfindung auch ein Kraftfahrzeug mit einem erfindungsgemäßen Navigationssystem. Das erfindungsgemäße Kraftfahrzeug ist bevorzugt als Kraftwagen, insbesondere als Personenkraftwagen oder Lastkraftwagen, ausgestaltet.

Zu der Erfindung gehört auch die Steuereinrichtung für das Navigationssystem bzw. für das Kraftfahrzeug. Die Steuereinrichtung weist eine Prozessoreinrichtung auf, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern im Rahmen der nachfolgenden Ansprüche auch in anderen Kombinationen oder in Alleinstellung verwendbar, ohne den Rahmen der Erfindung zu verlassen.

Dabei zeigen:
- Fig.1: eine schematische Darstellung eines Kraftfahrzeugs mit einem Navigationssystem gemäß einem Ausführungsbeispiel der Erfindung;
- Fig.2: eine schematische Darstellung einer von einer Anzeigeeinrichtung des Navigationssystems bereitgestellten Navigationsanzeige gemäß einem ersten Ausführungsbeispiel der Erfindung;
- Fig.3: eine schematische Darstellung der durch die Anzeigeeinrichtung des Navigationssystems bereitgestellten Navigationsanzeige gemäß einem zweiten Ausführungsbeispiel der Erfindung; und
- Fig.4: eine schematische Darstellung der durch die Anzeigeeinrichtung des Navigationssystems bereitgestellten Navigationsanzeige gemäß einem dritten Ausführungsbeispiel der Erfindung.

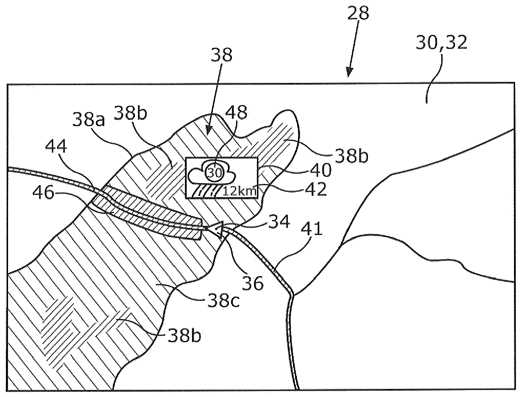

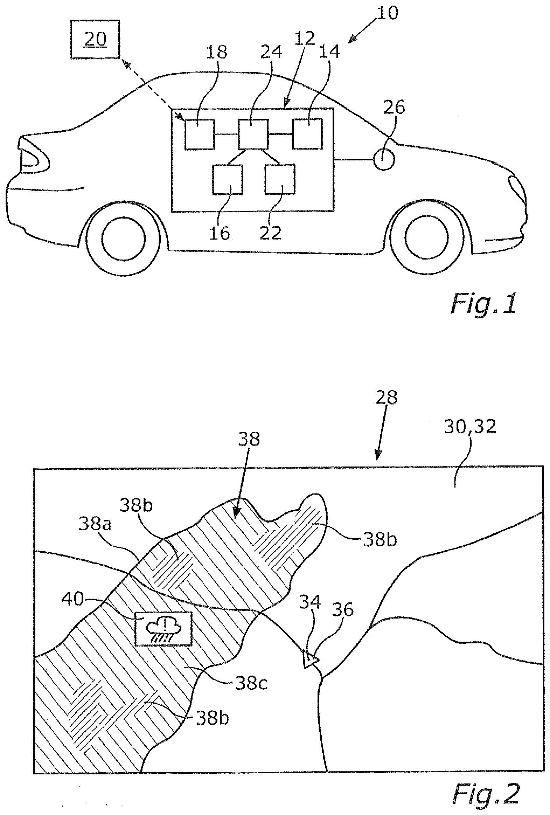

Fig. 1 zeigt eine schematische Darstellung eines Kraftfahrzeugs 10 mit einem Navigationssystem 12 bzw. eine Navigationseinrichtung gemäß einem Ausführungsbeispiel der Erfindung. Das Navigationssystem 12 umfasst dabei eine Anzeigeeinrichtung 14 zum Bereitstellen einer Navigationsanzeige. Weiterhin umfasst die Navigationssystem 12 eine Positionsbestimmungseinrichtung 16, wie beispielsweise einen GPS Empfänger, ein Kommunikationsmodul 18 bzw. Eine Kommunikationseinrichtung, zur Kommunikation mit einer kraftfahrzeugexternen Einrichtung 20, einen Speicher 22 sowie eine Steuereinrichtung 24. Das Navigationssystem 12 ist dazu ausgelegt, mittels der Positionsbestimmungseinrichtung 16 fortwährend eine aktuelle geographische Position des Kraftfahrzeugs 10 zu erfassen. Weiterhin können im Speicher 22 beispielsweise Kartendaten abgelegt sein, wobei die Steuereinrichtung 24 dazu ausgelegt ist, die Kartendaten aus dem Speicher 22 auszulesen und darauf basierend eine Anzeige einer Darstellung der Karte auf der Anzeigeeinrichtung 14 zu bewirken, welche zumindest einen Teil eines vorbestimmten geographischen Bereichs um die aktuelle geographische Position, welche von der Positionsbestimmungseinrichtung 16 bestimmt wurde, umfasst. Weiterhin kann die Steuereinrichtung 24 mittels des Kommunikationsmoduls 18 fortwährend von der fahrzeugexternen Einrichtung 20 aktuelle Wetterdaten betreffend den zumindest einen vorbestimmten geographischen Bereich um die aktuelle Position abrufen. Abhängigkeit von diesen abgerufenen Wetterdaten kann die Steuereinrichtung 24 bestimmen, ob im vorbestimmten geographischen Bereich um die aktuelle geographische Position zum Beispiel ein Niederschlagsgebiet vorliegt. Der vorbestimmte Bereich kann dabei beispielsweise der gesamte aktuell durch die Anzeigeeinrichtung 14 angezeigte bzw. durch die Kartendarstellung dargestellte geographische Bereich darstellen. Liegt also in diesem Bereich ein Niederschlagsgebiet, so kann dies ansprechend in der Kartendarstellung optisch kenntlich gemacht werden. Das Kraftfahrzeug 10 kann zudem noch einen Sensor 26 aufweisen, wie beispielsweise einen Regensensor. Auf Basis der von diesem Sensor 26 erfassten Sensordaten kann die Steuereinrichtung 24 zudem eine Niederschlagsmenge bestimmen, was es ermöglicht weitere vorteilhafte Informationen während der Fahrt durch das Niederschlagsgebiet in der Navigationsanzeige mittels der Anzeigeeinrichtung 14 darzustellen. Im Speicher 22 kann zudem auch eine oder mehrere Kommunikationsadressen der kraftfahrzeugexternen Einrichtung 20 abgelegt sein, auf Basis welcher das Kommunikationsmodul 18 eine kommunikative Verbindung zur kraftfahrzeugexternen Einrichtung 20 herstellen kann.

Fig. 2 zeigt eine schematische Darstellung einer durch die Anzeigeeinrichtung 14 Navigationssystem 12 bereitgestellten Navigationsanzeige 28. Diese Navigationsanzeige 28 umfasst dabei eine Kartendarstellung 30 von einem vorbestimmten geographischen Bereich 32 um die aktuelle geographische Position 34, welche durch ein korrespondierendes Positionssymbol 36 dargestellt wird. Für diesen vorbestimmten geographischen Bereich 32 um die aktuelle geographische Position 34 werden nun von einem Content Provider entsprechende Wetterdaten abgerufen, und wie beschrieben ermittelt, ob in diesem vorbestimmten Bereich 32 aktuell ein Niederschlagsgebiet 38 vorliegt. Ist dies der Fall, wie in Fig. 2 dargestellt, so wird dieses Niederschlagsgebiet 38 in der Kartendarstellung 30 optisch kenntlich gemacht, zum Beispiel mit einer entsprechenden Kontur 38a und oder durch eine flächige und vorzugsweise transparente Einfärbung, zum Beispiel in blau, des Bereichs des Niederschlagsgebiet 38. Zudem können durch unterschiedliche Helligkeitsstufen oder Einfärbung, zum Beispiel verschiedene Blautöne, auch innerhalb des Niederschlagsgebiets 38 Teilbereiche 38b mit erhöhtem Niederschlag, und Teilbereiche 38c mit niedrigerem oder geringerem Niederschlag ebenfalls optisch kenntlich gemacht werden.

Zusätzlich kann ein Warnsymbol 40 im Niederschlagsgebiet 38 dargestellt werden. In diesem in Fig. 2 dargestellten Beispiel befindet sich das Kraftfahrzeug also noch nicht im Niederschlagsgebiet 38. Dennoch kann dem Fahrer durch diese Navigationsanzeige 28 vorteilhafterweise in vorausschauender Weise dargestellt werden, wo und in welchem Ausmaß aktuell ein Niederschlagsgebiet 38 in seiner Umgebung vorliegt. Der Fahrer wird damit zum einen rechtzeitig gewarnt, was die Sicherheit erhöht, und zudem besteht auch die Möglichkeit, ein solches Niederschlagsgebiet 38 gegebenenfalls auch zu umfahren.

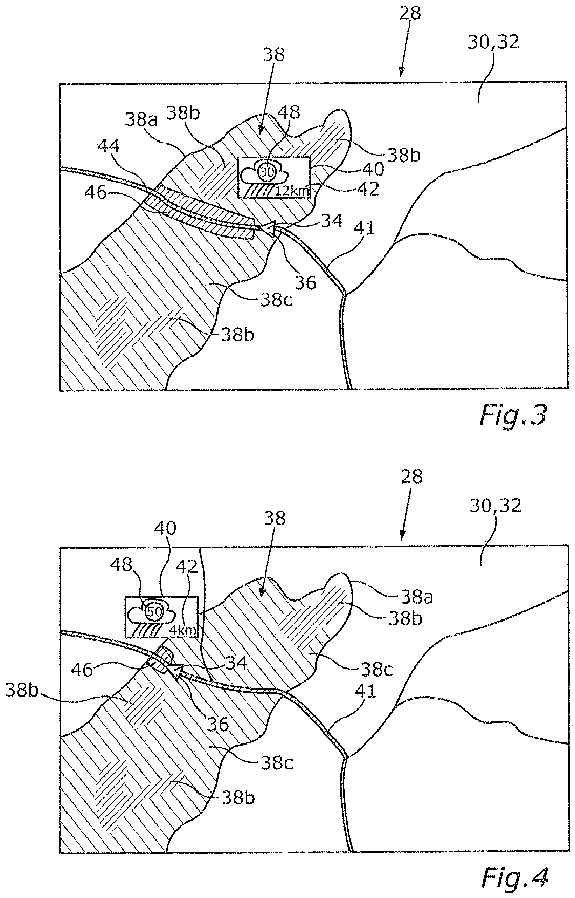

Fig. 3 zeigt eine Navigationsanzeige 28 welche durch die Anzeigeeinrichtung 14 des Navigationssystems 12 bereitgestellt wird, gemäß einem weiteren Ausführungsbeispiel der Erfindung. Diese Navigationanzeige 28 kann in gleicher Weise wie zu Fig. 2 beschrieben bereitgestellt werden, wobei im Folgenden nur auf die Unterschiede eingegangen wird. In diesem Beispiel wurde durch das Navigationssystem 12 zusätzlich eine Navigationsroute 41 von einem Startpunkt zu einem Endpunkt berechnet, wobei diese Navigationsroute 41 zum Teil in der Kartendarstellung 30 entsprechend dargestellt ist, und zum Beispiel ebenfalls farblich markiert ist. Darüber hinaus befindet sich das Kraftfahrzeug 10 aktuell bereits im Niederschlagsgebiet 38. Analog zu Fig. 2 wird auch in diesem Beispiel ein Warnsymbol 40 in der Navigationsanzeige 28 innerhalb des Niederschlagsgebiets 38 dargestellt. Während das Kraftfahrzeug 10 das Niederschlagsgebiet 38 durchfährt, kann beispielsweise dieses Warnsymbol 40 mit dem Positionssymbol 36 mitbewegt werden, insbesondere gegenüber der restlichen Darstellung. Zudem wird in diesem Beispiel nun vorteilhafterweise zusätzlich noch eine Restlänge 42 von der aktuellen Position 34 bis zu einem Ende 44 des Niederschlagsgebiets 38 entlang der Navigationsroute 41 berechnet und als Zahlenwert innerhalb des Warnsymbols 40 angezeigt. Zusätzlich kann diese verbleibende Restlänge auch durch eine optische Kenntlichmachung eines Korridors 46, zum Beispiel durch eine entsprechende Schraffur, hervorgehoben werden.

Weiterhin wird auch eine Geschwindigkeitsempfehlung 48 innerhalb des Warnsymbols 40 angezeigt. Diese Geschwindigkeitsempfehlung 48 kann beispielsweise in Abhängigkeit von der aktuellen Niederschlagsmenge an der aktuellen Position 34 berechnet werden. Diese Niederschlagsmenge wiederum kann auf Basis der bereitgestellten Wetterdaten und oder mittels des Sensors 26 des Kraftfahrzeugs 10, einer Intervallschaltung, usw. bestimmt werden.

Wurde beispielsweise keine Navigationsroute berechnet, so wird entsprechend auch keine Navigationsroute 41 dargestellt, jedoch kann auch in diesem Fall das Warnsymbol 40 eine entsprechende Geschwindigkeitsempfehlung 48, wie Fig. 3 dargestellt, umfassen. Allerdings ist es dann in diesem Fall bevorzugt, dass keine Restweglänge 42 angezeigt wird.

Fig. 4 zeigt eine weitere Navigationsanzeige 28 gemäß einem weiteren Ausführungsbeispiel der Erfindung. Hierbei wird wiederum nur auf die Unterschiede zu Fig. 3 eingegangen. In diesem Beispiel ist nun das Kraftfahrzeug 10 in seiner aktuellen Position 34 entlang der Navigationsroute 41 bereits weiter fortgeschritten. Entsprechend hat sich auch die Darstellung des Warnsymbols 40 geändert. Dieses zeigt nunmehr nur noch eine Restlänge 42 von beispielsweise 4 km an. Die kleinste Einheit für die Länge, insbesondere Restlänge, des Niederschlagsgebiet kann beispielsweise 1 km betragen. Ist das Niederschlagsgebiet kleiner als 1 km kann über eine Farbänderung der Anzeige "1 km" dies ebenfalls angezeigt werden. Zudem hat sich in diesem Beispiel auch die Niederschlagsmenge an der aktuellen Position 34 gegenüber der aktuellen Position 34 in Fig. 3 geändert, sodass entsprechend auch eine andere angepasste Geschwindigkeitsempfehlung 48 in der Navigationsanzeige 28 dargestellt wird.

Weiterhin kann es auch vorgesehen sein, dass die Darstellung aktueller Niederschlagsgebiete 38 auf Basis der Wetterdaten in der Navigationsanzeige 28, durch den Benutzer selbst aktiviert oder deaktiviert werden kann. Beispielsweise kann in einem entsprechenden Navigationsmenü, zum Beispiel in einer Menüebene unter Einstellungen, ein sprechender Menüpunkt vorgesehen sein, um diese Funktion zu aktivieren oder deaktivieren.

Insgesamt wird durch die Erfindung und ihre Ausgestaltungen auf vorteilhafterweise eine Navigationsanzeige bereitgestellt, welche es ermöglicht zusätzlich in der Kartendarstellung Niederschlagsgebiete geographisch korrekt darzustellen und optional durch angepasst berechnete Geschwindigkeitsempfehlungen und Ausdehnungsangaben sowie Restlängenangaben den Fahrer rechtzeitig zu warnen und umfassend zu informieren und durch Bereitstellung der nötigen Sicherheitsinformationen in wetterbedingten kritischen Situationen die Sicherheit zu erhöhen. Der Fahrer kann so auf einen Blick der Navigationsanzeige entnehmen, ob auf seiner Route ein Niederschlagsgebiet vorhanden ist, wie lange bzw. welche Ausdehnung das Regengebiet auf seiner Strecke hat. Zusätzlich bekommt der Fahrer eine Geschwindigkeitsempfehlung zum Beispiel in blau für diesen Streckenbereich sowie als Zahl, zum Beispiel in Kilometer, wie lange das Niederschlagsgebiet innerhalb seiner Strecke ist.

### Bezugszeichenliste

- 10: Kraftfahrzeug
- 12: Navigationssystem
- 14: Anzeigeeinrichtung
- 16: Positionsbestimmungseinrichtung
- 18: Kommunikationsmodul
- 20: Kraftfahrzeugexterne Einrichtung
- 22: Speicher
- 24: Steuereinrichtung
- 26: Sensor
- 28: Navigationsanzeige
- 30: Kartendarstellung
- 32: vorbestimmter geographischer Bereich
- 34: aktuelle Position
- 36: Positionssymbol
- 38: Niederschlagsgebiet
- 38a: Kontur
- 38b: Teilbereich mit erhöhtem Niederschlag
- 38c: Teilbereich mit geringerem Niederschlag
- 40: Warnsymbol
- 41: Navigationsroute
- 42: Restlänge
- 44: Ende des Niederschlagsgebiets
- 46: Korridor
- 48: Geschwindigkeitsempfehlung

## Patentansprüche

1. Verfahren zum Anzeigen einer Navigationsanzeige (28) auf einer Anzeigeeinrichtung (14) für ein Kraftfahrzeug (10), mit den Schritten:
a) Bestimmen einer aktuellen geographischen Position (34); und
b) Anzeigen einer Darstellung (30) einer Karte auf der Anzeigeeinrichtung (14), wobei die Darstellung (30) der Karte zumindest einen Teil eines vorbestimmten geographischen Bereichs (32) um die aktuelle geographische Position (34) umfasst;
c) Bereitstellen von Wetterdaten betreffend zumindest den vorbestimmten geographischen Bereich (32) um die aktuelle Position (34);
d) Ermitteln in Abhängigkeit von den Wetterdaten, ob in dem vorbestimmten Bereich ein geographisches Gebiet mit vorbestimmten Wetterverhältnissen (38) vorliegt;
e) Falls das Ermitteln ergibt, dass in dem vorbestimmten Bereich (32) ein Gebiet (38) mit den vorbestimmten Wetterverhältnissen vorliegt, optisches Kenntlichmachen des geographischen Gebiets (38) mit den vorbestimmten Wetterverhältnissen in der Darstellung (30) der Karte;
wobei zusätzlich zum optischen Kenntlichmachen des geographischen Gebiets (38) mit den vorbestimmten Wetterverhältnissen eine Geschwindigkeitsempfehlung (48) als Zahlenwert angezeigt wird, **dadurch gekennzeichnet, dass** die Geschwindigkeitsempfehlung (48) in Abhängigkeit von einer mittleren Niederschlagsmenge in Bezug auf zumindest einen Teilbereich (38b, 38c) des geographischen Gebiets (38) mit den vorbestimmten Wetterverhältnissen ermittelt wird.

2. Verfahren nach Anspruch 1,
**dadurch gekennzeichnet, dass**
das Gebiet (38) mit den vorbestimmten Wetterverhältnissen ein Niederschlagsgebiet (38) darstellt.

3. Verfahren nach einem der vorhergehenden Ansprüche,
**dadurch gekennzeichnet, dass**
zusätzlich zum optischen Kenntlichmachen des geographischen Gebiets (38) mit den vorbestimmten Wetterverhältnissen ein Symbol (40), insbesondere ein Niederschlagssymbol (40), angezeigt wird.

4. Verfahren nach einem der vorhergehenden Ansprüche,
**dadurch gekennzeichnet, dass**
die Niederschlagmenge auf Basis der Wetterdaten bestimmt wird.

5. Verfahren nach einem der vorhergehenden Ansprüche,
**dadurch gekennzeichnet, dass**
die Niederschlagmenge mittels eines Sensors (26), insbesondere Regensensors, bestimmt wird, wenn die aktuelle Position (34) im geographischen Gebiet (38) mit den vorbestimmten Wetterverhältnissen liegt.

6. Verfahren nach einem der vorhergehenden Ansprüche,
**dadurch gekennzeichnet, dass**
eine Navigationsroute (41) von einer Startposition zu einer Zielposition ermittelt wird, wobei eine Länge des Gebiets (38) mit den vorbestimmten Wetterverhältnissen entlang der Navigationsroute (41) ermittelt und als Zahlenwert in der Darstellung (30) angezeigt wird.

7. Verfahren nach einem der vorhergehenden Ansprüche,
**dadurch gekennzeichnet, dass**
eine Navigationsroute (41) von einer Startposition zu einer Zielposition ermittelt wird, wobei für den Fall, dass sich die aktuelle Position (34) im Gebiet (38) mit den vorbestimmten Wetterverhältnissen befindet, eine Restlänge (42) des Gebiets (38) mit den vorbestimmten Wetterverhältnissen von der aktuellen Position (34) bis zu einem Ende (44) des Gebiets (38) mit den vorbestimmten Wetterverhältnissen entlang der Navigationsroute (41) ermittelt und als Zahlenwert in der Darstellung (30) angezeigt wird.

8. Navigationssystem (12) mit einer Anzeigeeinrichtung (14) für ein Kraftfahrzeug (10), wobei das Navigationssystem (12) dazu ausgelegt ist, eine aktuelle geographische Position (34) zu bestimmen, und eine Darstellung (30) einer Karte auf der Anzeigeeinrichtung (14) anzuzeigen, wobei die Darstellung (30) der Karte zumindest einen Teil eines vorbestimmten geographischen Bereichs (32) um die aktuelle geographische Position (34) umfasst, wobei das Navigationssystem (12) dazu ausgelegt ist, in Abhängigkeit von bereitgestellten Wetterdaten betreffend zumindest den vorbestimmten geographischen Bereich (32) um die aktuelle Position (34), zu ermitteln, ob in dem vorbestimmten geographischen Bereich (32) ein geographisches Gebiet (38) mit vorbestimmten Wetterverhältnissen vorliegt, und falls das Ermitteln ergibt, dass in dem vorbestimmten Bereich (32) ein Gebiet (38) mit den vorbestimmten Wetterverhältnissen vorliegt, das geographische Gebiet (38) mit den vorbestimmten Wetterverhältnissen in der Darstellung (30) der Karte optisch kenntlich zu machen, wobei das Navigationssystem (12) dazu ausgelegt ist, zusätzlich zum optischen Kenntlichmachen des geographischen Gebiets (38) mit den vorbestimmten Wetterverhältnissen eine Geschwindigkeitsempfehlung (48) als Zahlenwert anzuzeigen, **dadurch gekennzeichnet, dass** das Navigationssystem (12) dazu ausgelegt ist, die Geschwindigkeitsempfehlung (48) in Abhängigkeit von einer mittleren Niederschlagsmenge in Bezug auf zumindest einen Teilbereich (38b, 38c) des geographischen Gebiets (38) mit den vorbestimmten Wetterverhältnissen zu ermitteln.

9. Kraftfahrzeug (10) mit einem Navigationssystem (12) nach Anspruch 8.

## Claims

1. A method for displaying a navigation display (28) on a display device (14) for a motor vehicle (10), having the steps:
a) determining a current geographical position (34); and
b) displaying a representation (30) of the map on the display device (14), wherein the representation (30) of the map comprises at least one part of a predetermined geographical region (32) around the current geographical position (34);
c) providing weather data concerning at least the predetermined geographical region (32) around the current position (34);
d) determining in dependence on the weather data, whether a geographical area with predetermined weather conditions (38) exists in the predetermined region;
e) if the determination shows that in the predetermined region (32) an area (38) exists with the predetermined weather conditions, optically indicating the geographical area (38) with the predetermined weather conditions in the representation (30) of the map;
wherein
in addition to the optical indication of the geographical area (38) with the predetermined weather conditions a speed recommendation (48) is displayed as a numerical value, **characterized in that** the speed recommendation (48) is determined in dependence on an average precipitation rate in relation to at least one sub-section (38b, 38c) of the geographical area (38) with the predetermined weather conditions.

2. A method according to Claim 1,
**characterized in that**
the area (38) with the predetermined weather conditions constitutes a precipitation area (38).

3. A method according to any one of the preceding claims,
**characterized in that**
in addition to the optical indication of the geographical area (38) with the predetermined weather conditions a symbol (40), in particular a precipitation symbol (40), is displayed.

4. A method according to any one of the preceding claims,
**characterized in that**
the precipitation rate is determined on the basis of weather data.

5. A method according to any one of the preceding claims,
**characterized in that**
the precipitation rate is determined by means of a sensor (26), in particular a rain sensor, if the current position (34) lies in the geographical area (38) with the predetermined weather conditions.

6. A method according to any one of the preceding claims,
**characterized in that**
a navigation route (41) from a start position to a destination position is determined, wherein a length of the area (38) with the predetermined weather conditions along the navigation route (41) is determined and is displayed as a numerical value in the representation (30).

7. A method according to any one of the preceding claims,
**characterized in that**
a navigation route (41) from a start position to a destination position is determined, wherein in the event that the current position (34) is located in the area (38) with the predetermined weather conditions, a remaining length (42) of the area (38) with the predetermined weather conditions is determined from the current position (34) to an end (44) of the area (38) with the predetermined weather conditions along the navigation route (41) and is displayed as a numerical value in the representation (30).

8. A navigation system (12) with a display device (14) for a motor vehicle (10) wherein the navigation system (12) is designed to determine a current geographical position (34), and to display a representation (30) of a map on the display device (14), wherein the representation (30) of the map comprises at least one part of a predetermined geographical region (32) around the current geographical position (34), wherein the navigation system (12) is designed, depending on weather data provided concerning at least the predetermined geographical region (32) around the current position (34), to determine whether a geographical area (38) with predetermined weather conditions exists in the predetermined geographical region (32) and if the determination shows that in the predetermined region (32) an area (38) with the predetermined weather conditions exists, to optically indicate the geographical area (38) with the predetermined weather conditions in the representation of the map,
wherein
the navigation system (12) is designed to display a speed recommendation (48) as a numerical value in addition to the optical indication of the geographical area (38) with the predetermined weather conditions, **characterized in that** the navigation system (12) is designed to determine the speed recommendation (48) depending on an average precipitation rate in relation to at least one sub-section (38b, 38c) of the geographical area (38) with the predetermined weather conditions.

9. A motor vehicle (10) with a navigation system (12) according to Claim 8.

## Revendications

1. Procédé d'affichage d'un affichage de navigation (28) sur un dispositif d'affichage (14) pour un véhicule automobile (10), avec les étapes suivantes :
a) détermination d'une position géographique actuelle (34) ; et
b) affichage d'une représentation (30) d'une carte sur le dispositif d'affichage (14), la représentation (30) de la carte comprenant au moins une partie d'une zone géographique prédéterminée (32) autour de la position géographique actuelle (34) ;
c) préparation de données météorologiques concernant au moins la zone géographique prédéterminée (32) autour de la position actuelle (34) ;
d) détermination, en fonction des données météorologiques, si, dans la zone prédéterminée, une région géographique existe avec des conditions météorologiques prédéterminées (38) ;
e) s'il résulte de la détermination que, dans la région prédéterminée (32), il existe une région (38) avec les conditions météorologiques prédéterminées, caractérisation visuelle de la région géographique (38) avec les conditions météorologiques prédéterminées sur la représentation (30) de la carte ;
moyennant quoi
en plus de la caractérisation visuelle de la région géographique (38) avec les conditions météorologiques prédéterminées, une recommandation de vitesse (48) est affichée sous la forme d'une valeur numérique, **caractérisé en ce que**
la recommandation de vitesse (48) est déterminée en fonction d'une quantité moyenne de précipitations sur au moins une partie (38b, 38c) de la région géographique (38) avec les conditions météorologiques prédéterminées.

2. Procédé selon la revendication 1,
**caractérisé en ce que**
la région (38) avec les conditions météorologiques prédéterminées constitue une région de précipitations (38).

3. Procédé selon l'une des revendications précédentes,
**caractérisé en ce que**
en plus de la caractérisation visuelle de la région géographique (38) avec les conditions météorologiques prédéterminées, un symbole (40), plus particulièrement, un symbole de précipitation (40), est affiché.

4. Procédé selon l'une des revendications précédentes,
**caractérisé en ce que**
la quantité de précipitation est déterminée sur la base des données météorologiques.

5. Procédé selon l'une des revendications précédentes,
**caractérisé en ce que**
la quantité de précipitation est déterminée à l'aide d'un capteur (26), plus particulièrement d'un capteur de pluie, lorsque la position actuelle (34) se trouve dans la région géographique (38) avec les conditions météorologiques prédéterminées.

6. Procédé selon l'une des revendications précédentes,
**caractérisé en ce que**
un itinéraire de navigation (41) d'une position de départ à une position d'arrivée est déterminé, une longueur de la région (38) avec les conditions météorologiques prédéterminées étant déterminée le long de l'itinéraire de navigation (41) et affichée sous la forme d'une valeur numérique sur la représentation (30).

7. Procédé selon l'une des revendications précédentes,
**caractérisé en ce que**
un itinéraire de navigation (41) d'une position de départ à une position d'arrivée est déterminé, moyennant quoi, dans le cas où la position actuelle (34) se trouve dans la région (38) avec les conditions météorologiques prédéterminées, une longueur résiduelle (42) de la région (38) avec les conditions météorologiques prédéterminées, entre la position actuelle (34) et une fin (44) de la région (38) avec les conditions météorologiques prédéterminées le long de l'itinéraire de navigation (41) est déterminée et est affichée sous la forme d'une valeur numérique sur la représentation (30).

8. Système de navigation (12) avec un dispositif d'affichage (14) pour un véhicule automobile (10), le système de navigation (12) étant conçu pour déterminer une position géographique actuelle (34) et pour afficher une représentation (30) d'une carte sur le dispositif d'affichage (14), la représentation (30) de la carte comprenant au moins une partie d'une zone géographique prédéterminée (32) autour de la position géographique actuelle (34), le système de navigation (12) étant conçu pour déterminer, en fonction de données météorologiques préparées concernant au moins la zone géographique prédéterminée (32) autour de la position actuelle (34), si, dans la zone géographique prédéterminée (32), il existe une région géographique (38) avec des conditions météorologiques prédéterminées et, si la détermination indique que, dans la zone (32), il existe une région (38) avec les conditions météorologiques prédéterminées, pour caractériser visuellement la région géographique (38) avec les conditions météorologiques prédéterminées sur la représentation (30) de la carte,
moyennant quoi
le système de navigation (12) est conçu, en plus de la caractérisation de la région géographique (38) avec les conditions météorologiques prédéterminées, pour afficher une recommandation de vitesse (48) sous la forme d'une valeur numérique, **caractérisé en ce que** le système de navigation (12) est conçu pour déterminer la recommandation de vitesse (48) en fonction d'une quantité moyenne de précipitation concernant au moins une partie (38b, 38c) de la région géographique (38) avec les conditions météorologiques prédéterminées.

9. Véhicule automobile (10) avec le système de navigation (12) selon la revendication 8.
